# EUROPÄISCHE PATENTSCHRIFT

(11) **EP 2 724 033 B1**
(45) Veröffentlichungstag und Bekanntmachung des Hinweises auf die Patenterteilung: **26.09.2018**
(21) Anmeldenummer: 12740342.6
(22) Anmeldetag: 20.07.2012
(51) Int. Cl.: F16B 5/06, F16B 21/07, B29C 45/16

(54) **STECKKUPPLUNG UND VERFAHREN ZU IHRER HERSTELLUNG**
PLUG-IN COUPLING AND METHOD FOR THE PRODUCTION THEREOF
ACCOUPLEMENT ENFICHABLE ET PROCÉDÉ POUR LE FABRIQUER

(30) Priorität: 27.07.2011 DE 102011052190
(43) Veröffentlichungstag der Anmeldung: 30.04.2014
(73) Patentinhaber: Böllhoff Verbindungstechnik GmbH, 33649 Bielefeld (DE)
(72) Erfinder: METTEN, Andreas, 33829 Borgholzhausen (DE); FRITZSCH, Jasmin, 33790 Halle (DE)
(74) Vertreter: Heyer, Volker
(86) Internationale Anmeldenummer: PCT/EP2012/064310
(87) Internationale Veröffentlichungsnummer: WO 2013/014085

(56) Entgegenhaltungen:
- EP-A1- 1 348 876
- EP-A1- 1 906 032
- DE-A1- 10 351 975
- DE-A1- 19 526 934
- DE-U1- 20 117 323
- DE-U1- 20 315 778

## Beschreibung

### 1. Gebiet der Erfindung

Die vorliegende Erfindung betrifft eine Steckkupplung bestehend aus einem negativen und einem positiven Kupplungsteil, insbesondere eine Kugelpfanne als negatives Kupplungsteil in Kombination mit einem Kugelbolzen als positives Kupplungsteil. Des Weiteren betrifft vorliegende Erfindung ein Herstellungsverfahren für das negative Kupplungsteil der Steckkupplung.

### 2. Hintergrund der Erfindung

Im Stand der Technik sind verschiedene Steckkupplungen bekannt, die beispielsweise in US 5,580,204, EP 0 902 198 B1, EP 1 746 294 A1, DE 201 17 323 U1, US 5,409,302 und US 4,904,107 beschrieben sind.

US 5,580,204 beschreibt ein negatives Kupplungsteil, im Speziellen eine Kugelpfanne, die aus Kunststoff hergestellt ist. Diese Kugelpfanne weist an ihrer Außenseite eine umlaufende Vertiefung sowie einen vorstehenden Haltering auf, sodass in die umlaufende Vertiefung die Innenwand einer Öffnung eines Bauteils einschnappen kann. Auf diese Weise wird die Kugelpfanne als einteiliges Bauteil aus einem Kunststoff bestehend in der Öffnung eines Verkleidungsteils im Fahrzeugbau befestigt. In diese Kugelpfanne schnappt ein Bolzen mit Kugelkopf ein, der beispielsweise an einer Haltestruktur im Karosseriebau befestigt ist.

Auch EP 0 902 198 B1 beschreibt ein negatives Kupplungsteil zur Aufnahme eines Bolzens mit Kugelkopf, dass aus einem Kunststoff hergestellt ist. Die Konstruktion des negativen Kupplungsteils ist derart ausgelegt, dass sich ein Haltering um die Kugelpfanne herum erstreckt, sodass ein Abstand zwischen Haltering und Kugelpfanne zur Schwingungsdämpfung vorhanden ist. Dieser Haltering ist an einem konisch geformten Einlaufbereich des negativen Kupplungsteils befestigt.

Die bekannten Steckkupplungen haben den Nachteil, dass aufgrund der Materialwahl der Steckkupplung sowie aufgrund ihrer Konstruktion ein Kompromiss gefunden werden muss, um ein optimales Befestigen des Kugelbolzens innerhalb des negativen Kupplungsteils und des Kupplungsteils an einem Bauteil sowie eine zufriedenstellende Schwingungsdämpfung zwischen negativem und positivem Kupplungsteil zu realisieren. Dieser Kompromiss hat häufig zur Folge, dass nicht beide Funktionen optimal in der Steckkupplung realisiert sind.

Eine Befestigungs- und Schwingungsentkopplungsvorrichtung zum Befestigen eines ersten Elements an einem zweiten Element, das mit einer Befestigungsstange fest verbunden ist, ist in EP 1 348 876 A1 beschrieben. Die Vorrichtung weist ein flexibles Teil auf, das mit Verbindungen zum ersten Element versehen ist. Ein starres Teil, das mit einem Teil des flexiblen Teils verbunden ist, weist ein Gehäuse zur Aufnahme der Befestigungsstange auf.

Es ist daher die Aufgabe vorliegender Erfindung, eine Steckkupplung bereitzustellen, mit der im Vergleich zum Stand der Technik eine verbesserte Befestigungsfunktion zwischen negativem und positivem Kupplungsteil sowie eine verbesserte Schwingungsentkopplung zwischen negativem und positivem Kupplungsteil realisierbar ist. Es ist des Weiteren eine Aufgabe vorliegender Erfindung, ein entsprechendes Herstellungsverfahren für die Steckkupplung vorzuschlagen.

### 3. Zusammenfassung der Erfindung

Die obige Aufgabe wird durch ein negatives Kupplungsteil gemäß dem unabhängigen Patentanspruch 1 sowie eine Steckkupplung gemäß dem unabhängigen Patentanspruch 8 gelöst. Ein Herstellungsverfahren zur Herstellung des negativen Kupplungsteils geht aus dem unabhängigen Patentanspruch 10 hervor. Vorteilhafte Ausgestaltungen vorliegender Erfindung, Weiterentwicklungen und Modifikationen gehen aus den abhängigen Patentansprüchen sowie der Beschreibung mit den begleitenden Zeichnungen hervor.

Die vorliegende Erfindung umfasst ein negatives Kupplungsteil für eine Steckkupplung, mit der ein erstes und ein zweites Bauteil lösbar miteinander verbindbar sind, wobei das negative Kupplungsteil die folgenden Merkmale aufweist: eine Kupplungskonstruktion aus einem ersten Werkstoff zum Aufnehmen und lösbaren Befestigen eines positiven Kupplungsteils und eine Haltekonstruktion aus einem zweiten Werkstoff, die die Kupplungskonstruktion umgibt, zum Befestigen des negativen Kupplungsteils am zweiten Bauteil, während der zweite Werkstoff eine höhere Elastizität als der erste Werkstoff aufweist, sodass Bauteilschwingungen durch die Haltekonstruktion aufnehmbar sind.

Die Konstruktion des negativen Kupplungsteils der erfindungsgemäßen Steckkupplung basiert auf der Nutzung von zwei Werkstoffen unterschiedlicher Elastizität zur Herstellung des negativen Kupplungsteils. Ein Werkstoff geringerer Elastizität und hoher Stabilität wird zur Herstellung der Kupplungskonstruktion genutzt, in der das positive Kupplungsteil, beispielsweise ein Bolzen mit Kugelkopf, aufgenommen und befestigt wird. Die geringe Elastizität im Vergleich zum zweiten Werkstoff sowie die hohe Stabilität des ersten Werkstoffs stellen sicher, dass der Bolzen mit Kugelkopf, also das positive Kupplungsteil, verlässlich in der Kupplungskonstruktion gehalten wird. Um eventuelle Schwingungen zwischen dem ersten und dem zweiten Bauteil und somit zwischen dem negativen und dem positiven Kupplungsteil dämpfen zu können, wird die Kupplungskonstruktion über eine Haltekonstruktion aus einem zweiten Werkstoff am zweiten Bauteil befestigt. Der Werkstoff der Haltekonstruktion besitzt im Vergleich zum ersten Werkstoff der Kupplungskonstruktion eine höhere Elastizität, sodass Bauteilschwingungen von erstem und zweitem Bauteil gedämpft und/oder Geräusche zwischen diesen Bauteilen entkoppelt werden können. Der zweite Werkstoff ist somit leichter elastisch verformbar als der erste Werkstoff, sodass trotz verlässlich realisierter Befestigung des negativen Kupplungsteils im zweiten Bauteil eine gewisse Flexibilität des negativen Kupplungsteils relativ zum zweiten Bauteil gewährleistet ist. Diese Flexibilität stellt neben einer Schwingungsentkopplung auch einen Toleranzausgleich bei der Befestigung des ersten Bauteils am zweiten Bauteil über die erfindungsgemäße Steckkupplung sicher. Da sich die Kupplungskonstruktion über die Elastizität des zweiten Werkstoffs der Haltekonstruktion in einem gewissen Toleranzbereich in lateraler und axialer Richtung versetzen kann, werden Fehlausrichtungen zwischen dem ersten und zweiten Bauteil oder zwischen dem negativen Kupplungsteil und dem positiven Kupplungsteil ausgeglichen, sodass trotz dieser Fehlausrichtungen über den Toleranzausgleich des negativen Kupplungsteil eine optimale Verbindung zwischen dem ersten und zweiten Bauteil realisierbar ist.

Die Kupplungskonstruktion des negativen Kupplungsteils umfasst mindestens zwei in axialer Richtung der Kupplungskonstruktion verlaufende Federarme, die an einem zweiten Ende über eine umlaufende Haltestruktur miteinander verbunden sind. Zudem besteht bevorzugt die Kupplungskonstruktion aus einem Metall, einem thermoplastischen Kunststoff oder einem thermoplastischen Elastomer, das/der eine geringere Elastizität als der zweite Werkstoff der Haltekonstruktion aufweist.

Mithilfe der Konstruktion der Kupplungskonstruktion, im Speziellen der in axialer Richtung der Kupplungskonstruktion verlaufenden mindestens zwei Federarme, wird trotz der geringeren Elastizität des ersten Werkstoffs im Vergleich zum zweiten Werkstoff ein federndes Verbinden zwischen Kupplungskonstruktion und positivem Kupplungsteil sichergestellt. Der Bolzen mit Kugelkopf, der beispielsweise als positives Kupplungsteil dient, kann auf diese Weise zwischen den mindestens zwei Federarmen einschnappen, die aufgrund ihres Verlaufs eine Kugelpfanne bilden. Dieses Einschnappen kann in seiner Stärke dadurch variiert werden, dass zwei, drei, vier oder fünf Federarme die Kugelpfanne oder eine ähnlich verrastende Struktur der Kupplungskonstruktion bilden. Um die Federarme innerhalb der Kupplungskonstruktion zu stabilisieren, sind sie an ihrem zweiten Ende über die umlaufende Haltestruktur miteinander verbunden. Eine weitere Stabilisierung der Kupplungskonstruktion ist dadurch realisierbar, dass die Federarme bevorzugt auch an ihrem ersten Ende miteinander verbunden sind.

Gemäß vorliegender Erfindung wird die Haltekonstruktion des negativen Kupplungsteils durch einen um die Kupplungskonstruktion umlaufenden und an dieser befestigten Ring gebildet, der in einer Öffnung des zweiten Bauteils befestigbar ist. Dieser Ring umfasst vorzugsweise eine umlaufende und nach außen in radialer Richtung offene radiale Vertiefung, in der eine Innenseite der Öffnung des zweiten Bauteils aufnehmbar ist. Gemäß einer weiteren bevorzugten Ausgestaltung umfasst der Ring bzw. die Haltekonstruktion eine in axialer Richtung der Haltekonstruktion offene und um die Haltekonstruktion umlaufende axiale Vertiefung, sodass Verformungen der Haltekonstruktion in radialer Richtung aufnehmbar sind.
Die umlaufende und ringförmige Haltekonstruktion besteht aus dem zweiten Werkstoff, der im Vergleich zum ersten Werkstoff der Kupplungskonstruktion eine höhere Elastizität aufweist. Dies stellt sicher, dass die Haltekonstruktion Schwingungen der Bauteile sowie Geräusche aufnehmen und dämpfen kann. Des Weiteren gewährleistet die höhere Elastizität des zweiten Werkstoffs einen Toleranzausgleich zwischen dem negativen und positiven Kupplungsteil, was unten näher beschrieben ist. Neben den Materialeigenschaften des zweiten Werkstoffs wird ebenfalls durch den Aufbau der Haltekonstruktion die Befestigungs- und Dämpfungsfunktion des negativen Kupplungsteils unterstützt. Zu diesem Zweck weist der Ring der Haltekonstruktion eine umlaufende radiale Vertiefung auf, in der die Innenwand einer Öffnung des ersten Bauteils befestigbar, im Speziellen einschnappbar, ist. Zudem dient eine vorzugsweise umlaufende und in axialer Richtung offene Vertiefung einem Toleranzausgleich zwischen negativem Kupplungsteil und positivem Kupplungsteil, da aufgrund dieses Aufbaus das negative Kupplungsteil in radialer und axialer Richtung bewegbar angeordnet ist. Dieser Toleranzausgleich aufgrund der axialen Vertiefung wird vorzugsweise konstruktiv durch das Vorsehen von die axiale Vertiefung überbrückenden Versteifungsstegen optimal auf die zu erzielende Verbindung abgestimmt. Diese überbrückenden Versteifungsstege werden bevorzugt in regelmäßigen Abständen innerhalb der axialen Vertiefung angeordnet. Zudem wird die Anzahl der überbrückenden Versteifungsstege in Abhängigkeit von der gewünschten Stabilität der umlaufenden Haltekonstruktion variiert.

Die Haltekonstruktion des negativen Kupplungsteils besteht vorzugsweise aus einem thermoplastischen Kunststoff oder einem thermoplastischen Elastomer höherer Elastizität als der erste Werkstoff der Kupplungskonstruktion.

Vorliegende Erfindung umfasst zudem eine Steckkupplung, mit der das erste Bauteil und das zweite Bauteil lösbar miteinander verbindbar sind und die die folgenden Merkmale aufweist: ein positives Kupplungsteil in Verbindung mit dem ersten Bauteil, das in einem negativen Kupplungsteil gemäß obiger Beschreibung in Verbindung mit dem zweiten Bauteil lösbar und verrastend aufnehmbar ist. In einer bevorzugten Ausführungsform umfasst die erfindungsgemäße Steckkupplung einen Bolzen mit Kugelkopf als positives Kupplungsteil und eine Kupplungskonstruktion mit Kugelpfanne zur Aufnahme des Kugelkopfs, wobei die Kupplungskonstruktion mit einem umlaufenden Ring als Haltekonstruktion verbunden ist, der eine radiale Vertiefung zur Befestigung des negativen Kupplungsteils am zweiten Bauteil und eine axiale Vertiefung zum Ausgleich von Schwingungen und/oder Geräuschen und Toleranzen aufweist.

Vorliegende Erfindung offenbart zudem ein Herstellungsverfahren für das oben beschriebene negative Kupplungsteil bestehend aus zwei Werkstoffen unterschiedlicher Elastizität, dass die folgenden Schritte aufweist: Bereitstellen einer Kupplungskonstruktion aus einem ersten Werkstoff und Umspritzen der Kupplungskonstruktion mit einer Haltekonstruktion aus einem zweiten Werkstoff, wobei der zweite Werkstoff eine höhere Elastizität als der erste Werkstoff aufweist.

In bevorzugter Ausgestaltung dieses Herstellungsverfahren erfolgt ein Spritzgießen der Kupplungskonstruktion aus einem thermoplastischen Kunststoff oder einem thermoplastischen Elastomer sowie das Umspritzen der Haltekonstruktion aus einem elastischeren thermoplastischen Kunststoff oder Elastomer im Vergleich zur Kupplungskonstruktion. Es ist ebenfalls bevorzugt, die Kupplungskonstruktion aus Metall herzustellen und dann im vorliegenden Herstellungsverfahren mit der Haltekonstruktion zu umspritzen. Bei der Herstellung der Haltekonstruktion wird vorzugsweise eine in axialer Richtung der Haltekonstruktion offene und um die Haltekonstruktion umlaufende axiale Vertiefung und/oder eine umlaufende und nach außen in radialer Richtung offene radiale Vertiefung erzeugt. Diese dienen der bereits oben beschriebenen Befestigung und/oder Schwingungsentkopplung und/oder dem Toleranzausgleich zwischen dem negativen und positiven Kupplungsteil der erfindungsgemäßen Steckkupplung.

### 4. Beschreibung der begleitenden Zeichnung

Die bevorzugten Ausführungsformen vorliegender Erfindung werden unter Bezugnahme auf die begleitende Zeichnung näher erläutert. Es zeigen:
- Figur 1: eine schematische Darstellung einer in zwei Bauteilen installierten bevorzugten Steckkupplung aus negativem und positivem Kupplungsteil,
- Figur 2: eine perspektivische Ansicht des negativen Kupplungsteils gemäß einer bevorzugten Ausführungsform,
- Figur 3: eine teilweise Schnittansicht des negativen Kupplungsteils gemäß Fig. 2,
- Figur 4: eine Ansicht von unten des negativen Kupplungsteils gemäß Fig. 2,
- Figur 5: ein Teilschnitt des negativen Kupplungsteils gemäß Fig. 2,
- Figur 6: ein weiterer Teilschnitt des negativen Kupplungsteils gemäß Fig. 2,
- Figur 7: eine schematische Darstellung der Steckkupplung aus Figur 1 mit teilweise im negativen Kupplungsteil eingesetztem positiven Kupplungsteil, vorzugsweise ein Bolzen mit Kugelkopf und

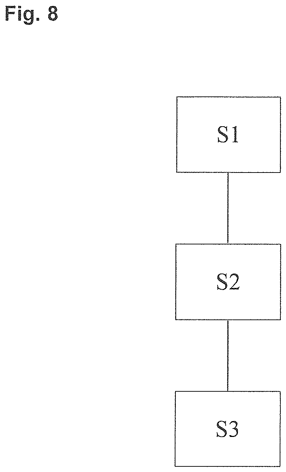

- Figur 8: ein Flussdiagramm einer bevorzugten Ausführungsform des Herstellungsverfahrens des negativen Kupplungsteils vorliegender Erfindung.

### 5. Detaillierte Beschreibung der bevorzugten Ausführungsformen

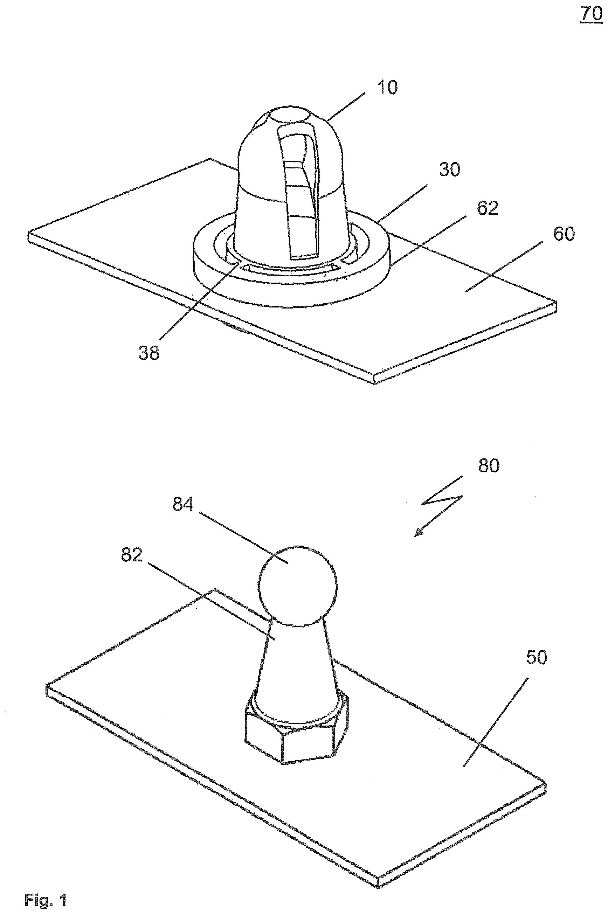

Eine bevorzugte Ausführungsform der erfindungsgemäßen Steckkupplung 70 ist in Fig. 1 gezeigt. Die Steckkupplung 70 besteht aus einem positiven Kupplungsteil 80 das mit einem ersten Bauteil 50 verbindbar ist. Vorzugsweise besteht das positive Kupplungsteil 80 aus einem Bolzen 82 mit einem Kugelkopf 84. Es sind ebenfalls andere Kopfformen bevorzugt, wie beispielsweise eine eckige Aufweitung im Vergleich zum Bolzen 82. Diese eckige Aufweitung (nicht gezeigt) gewährleistet ebenfalls eine verrastende Verbindung zu einem negativen und somit den Kopf des Bolzens 82 aufnehmenden Kupplungsteil 1.

Die Steckkupplung 70 umfasst des Weiteren das negative Kupplungsteil 1. Es besteht aus einer Kupplungskonstruktion 10, in der das positive Kupplungsteil 80 lösbar befestigbar ist. Gemäß einer Ausführungsform vorliegender Erfindung umfasst die Kupplungskonstruktion 10 eine Kugelpfanne, in der der Kugelkopf 84 des oben beschriebenen Bolzens 82 lösbar verrastend aufnehmbar ist. Als Kupplungskonstruktion 10 sind ebenfalls andere Gestaltungen denkbar, die komplementär zum oben beschriebenen positiven Kupplungsteil 80 geformt sind. Die vorteilhaften Eigenschaften der erfindungsgemäßen Steckkupplung 70 werden im Weiteren am Beispiel eines Bolzens 82 mit Kugelkopf 84 und einem entsprechenden negativen Kupplungsteil 1 mit Kugelpfanne 16 beschrieben.

Die Kupplungskonstruktion 10 des negativen Kupplungsteils 1 ist über eine Haltekonstruktion 30 in einer Öffnung 62 des Bauteils 60 befestigbar. Die Haltekonstruktion 30 besteht aus einem Werkstoff, der im Vergleich zum Werkstoff der Kupplungskonstruktion 10 eine höhere Elastizität aufweist. Auf dieser Grundlage gewährleistet der Werkstoff der Kupplungskonstruktion 10 durch seine geringere Elastizität im Vergleich zum Werkstoff der Haltekonstruktion 30 ein verlässliches Ankoppeln des Kugelkopfes 84 an die Kugelpfanne 16 der Kupplungskonstruktion 10.

Vorzugsweise besteht die Kupplungskonstruktion 10 aus Metall, einem thermoplastischen Kunststoff oder einem Elastomer. Bevorzugte Materialien für die Kupplungskonstruktion sind PA (Polyamid), PP (Polypropylen) und POM (Polyoxymethylen(Polyacetal)). Weiterhin denkbar sind PET (Polyethylenterephthalat), PBT (**Polybutylenterephthalat**), ABS (Acrylnitril/Butadien/Styrol-Pfropfcopolymer), PC (Polycarbonate), eine Mischung aus PC und ABS oder PE (Polyethylen). Je nachdem wie die Federarme gestaltet werden, werden die genannten Materialien ausgewählt. Das Material der Kupplungskonstruktion hat eine Dehnung von 3 - 70 %, bevorzugt 3 - 50 % und weiter bevorzugt von 3 - 20 %.

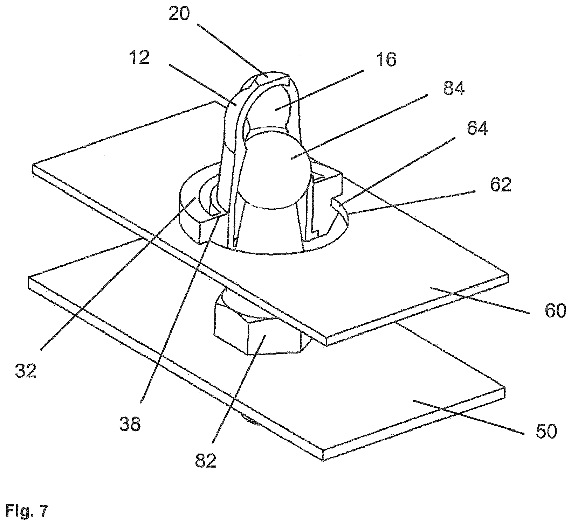

Bei der Herstellung des negativen Kupplungsteils 1 wird die Kupplungskonstruktion aus Metall durch bekannte Umformverfahren hergestellt. Besteht die Kupplungskonstruktion 10 aus Kunststoff oder einem Elastomer, wird die Kupplungskonstruktion 10 in der unten beschriebenen Form spritzgegossen (Schritt S1 in Fig. 7). Besteht die Kupplungskonstruktion 10 aus Kunststoff wird gemäß einer weiteren Ausführungsform ein Metalleinlegeteil im Bereich der Kugelpfanne 16 eingeformt, im Speziellen umspritzt. Auf diese Weise wird die Form der Kugelpfanne 16 vorgegeben und/oder die spätere Kugelpfanne 16 verstärkt.

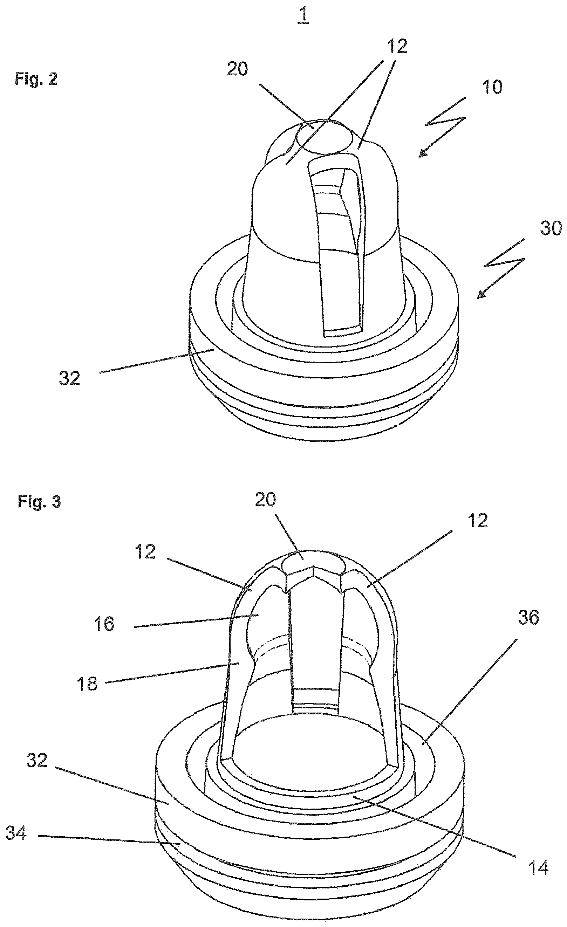

Wie man in den Fig. 2-6 erkennen kann, umfasst die Kupplungskonstruktion 10 mindestens zwei Federarme 12 die sich in axialer Richtung der Steckkupplung 70 erstrecken. Die Federarme 12 sind aufgrund ihrer Form und ihres Werkstoffs derart ausgebildet, dass sie radial nach außen federn können. Die federnde Beweglichkeit der Federarme 12 ist über die Länge, die Stärke und die Breite der Federarme 12 einstellbar. Die Federarme 12 bilden durch ihre Kontur an ihrer radialen Innenseite die Kugelpfanne 16. Die Kugelpfanne 16 weist einen umlaufenden Hinterschnitt 18 auf, sodass der Kugelkopf 84 mithilfe einer überwindbaren Haltekraft formschlüssig innerhalb der Kugelpfanne 16 gehalten wird.

Gemäß einer nicht gezeigten Ausführungsform umfasst die Kugelpfanne 16 einen zweiten Hinterschnitt in axialer Richtung beabstandet zum Hinterschnitt 18, sodass der Kugelkopf 84 zwischen den beiden Hinterschnitten im installierten Zustand gehalten wird.

Gemäß einer anderen Ausführungsform sind die mindestens zwei Federarme 12 an ihrem Ende 20 angrenzend an die Kugelpfanne 16 miteinander verbunden. Diese Verbindung am Ende 20 stabilisiert die Federarme 12 und gewährleistet einen verlässlichen Halt des Kugelkopfes 84 in der Kugelpfanne 16.

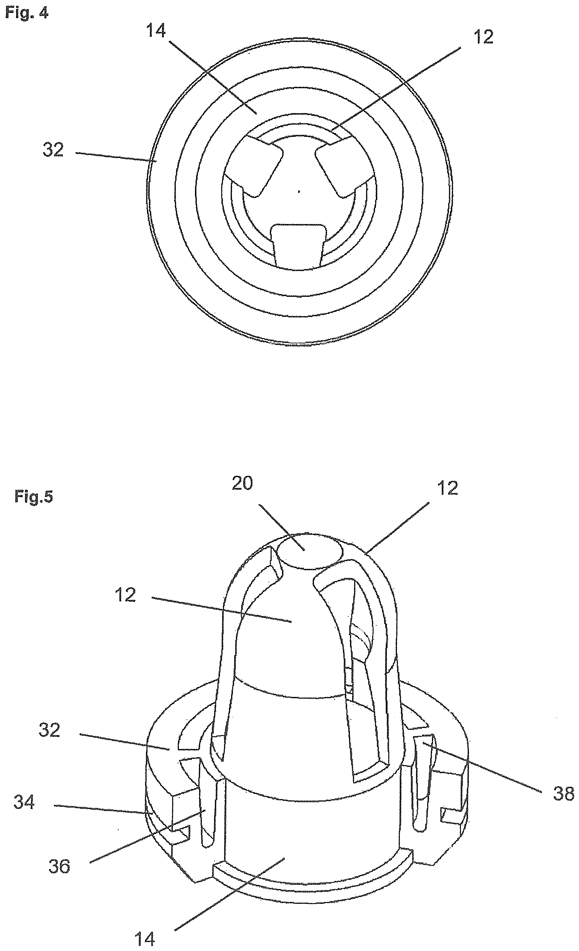

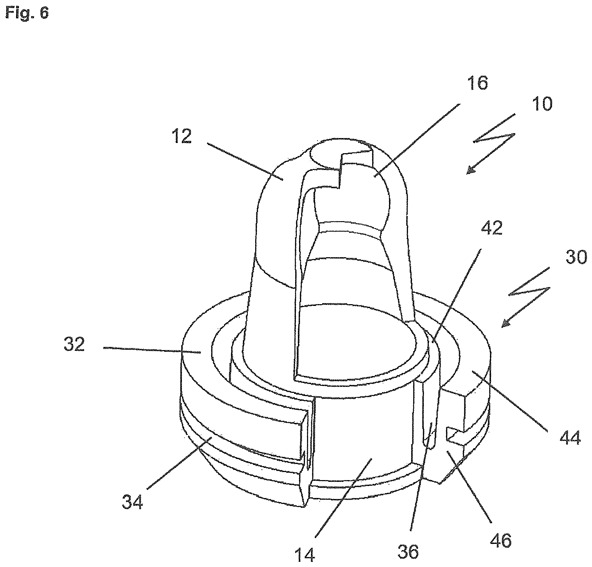

Um die federnde Beweglichkeit der Federarme 12 zu begrenzen, sind die Federarme 12 an ihrem der Kugelpfanne 16 abgewandten Ende über eine Haltestruktur 14 miteinander verbunden. Eine weitere Begrenzung der Beweglichkeit der Federarme 12 erfolgt vorzugsweise über die Verbindung der Federarme 12 miteinander an ihrem der Kugelpfanne 16 zugewandten Enden, wie es oben beschrieben worden ist. Die Haltestruktur 14 besteht vorzugsweise aus einzelnen verbindenden Stegen (nicht gezeigt), die zwischen benachbarten Federarmen 12 angeordnet sind. Gemäß einer weiteren bevorzugten Ausführungsform, wie sie in den Fig. 5 und 6 gezeigt ist, ist die Haltestruktur 14 ein umlaufender Ring, der die Federarme 12 miteinander verbindet. Die umlaufende Haltestruktur 14 umfasst gemäß einer weiteren Ausführungsform eine umlaufende radial außen liegende Vertiefung, die durch zwei in radialer Richtung nach außen vorstehende umlaufende Ränder begrenzt wird. Diese Vertiefung dient der Aufnahme der Haltekonstruktion 30, wie unten näher erläutert ist.

Zur späteren Befestigung des negativen Kupplungsteils 1 in der Öffnung 62 des Bauteils 60 umfasst das negative Kupplungsteils 1 die Haltekonstruktion 30. Die Haltekonstruktion 30 ist ein umlaufender Ring aus einem Werkstoff mit höherer Elastizität im Vergleich zum Werkstoff der Kupplungskonstruktion 10. Die Haltekonstruktion 30 ist ebenfalls aus einem thermoplastischen Kunststoff oder einem Elastomer hergestellt. Die Haltekonstruktion 30 ist an dem der Kugelpfanne 16 abgewandten Ende der Kupplungskonstruktion 10 angeordnet.

Gemäß einer nicht gezeigten Ausführungsform sind die Federarme 12 der Kupplungskonstruktion 10 nicht über die Haltestruktur 14 miteinander verbunden. Stattdessen werden die der Kugelpfanne 16 abgewandten Enden der Federarme 12 mit der ringförmigen Haltekonstruktion 30 umspritzt, sodass sie über die Haltekonstruktion 30 stabilisierend miteinander verbunden sind.

Gemäß einer weiteren bevorzugten Ausführungsform des negativen Kupplungsteils 1 wird die Haltestruktur 14, die vorzugsweise umlaufend ausgebildet ist, mit der ringförmigen Haltekonstruktion 30 umspritzt (vgl. Fig. 4, 5 und 6). Da die ringförmige Haltekonstruktion 30 aus einem Werkstoff höherer Elastizität als der Werkstoff der Kupplungskonstruktion 10 besteht, sind über die Haltekonstruktion 30 Toleranzen zwischen den Bauteilen 60, 70 ausgleichbar. Zudem nimmt die Haltekonstruktion 30 Schwingungen auf, sodass die Haltekonstruktion 30 und somit das negative Kupplungsteil 1 schwingungs- und geräuschentkoppelnd wirkt.

Die Haltekonstruktion 30 besteht vorzugsweise aus TPE-V (vernetzte thermoplastische Elastomere auf Olefinbasis), TPE-S (Styrol-Blockcopolymere) oder TPE-E (thermoplastische Polyesterelastomere /thermoplastische Copolyester). Zudem werden in weiteren Anwendungen auch TPE-O (thermoplastische Elastomere auf Olefinbasis), TPE-A (thermoplastische Copolyamide), TPE-U (thermoplastische Elastomere auf Urethanbasis) oder Silikone verwendet. Das Material der Haltekonstruktion 30 hat eine Dehnung von annähernd oder mehr als 200 %.

Wie anhand der Schnittdarstellung der Fig. 5 und 6 erkennbar ist, weist die Haltekonstruktion 30 eine umlaufende und in radialer Richtung offene radiale Vertiefung 34 auf. Die radiale Vertiefung 34 dient der Aufnahme der inneren Wand der Öffnung 62 des Bauteils 60, wenn das negative Kupplungsteil 1 darin installiert wird. Aufgrund der Stärke der Haltekonstruktion 30 in radialer Richtung und der Elastizität des Werkstoffs der Haltekonstruktion 30 ist die Haltekonstruktion 30 in radialer Richtung komprimierbar. Diese Eigenschaft der Haltekonstruktion 30 stellt die Aufnahme von Schwingungen der Bauteile 50, 60 in radialer Richtung bezogen auf die Haltekonstruktion 30 sowie die Möglichkeit des Toleranzausgleiches zwischen den Bauteilen 50, 60 sicher.

Bevorzugt umfasst die Haltekonstruktion 30 eine umlaufende und in axialer Richtung der Haltekonstruktion 30 offene axiale Vertiefung 36, wie sie in den Fig. 5 und 6 gezeigt ist. Durch die axiale Vertiefung 36 besteht die Haltekonstruktion 30 aus zwei konzentrisch zueinander angeordneten Ringen 42, 44, die über einen umlaufenden Steg 46 miteinander verbunden sind (vgl. Fig. 6). Der Steg 46 erstreckt sich in radialer Richtung bezogen auf die Haltekonstruktion 30. In Abhängigkeit von der radialen Länge und der axialen Stärke des Stegs 46 sind die konzentrische Ringe 42, 44 der Haltekonstruktion 30 unterschiedlich stark im Verhältnis zueinander in radialer und axialer Richtung versetzbar. Dieser Versatz zwischen den konzentrischen Ringen 42, 44 der Haltekonstruktion 30 reguliert bevorzugt den Toleranzausgleich und die Dämpfung von Schwingungen und/oder Geräuschen des negativen Kupplungsteils 1 und der gesamten Steckkupplung 70.

Es ist des Weiteren bevorzugt, die konzentrischen Ringe 42, 44 über eine Mehrzahl von Versteifungsstegen 38 miteinander zu verbinden. Die Versteifungsstege 38 überbrücken die axiale Vertiefung 36, wie es in Fig. 5 gezeigt ist. Im Vergleich dazu zeigt Fig. 6 die axiale Vertiefung 36 ohne Versteifungsstege 38. Diese Versteifungsstege 38 sind in regelmäßigen Abständen innerhalb der axialen Vertiefung 36 angeordnet.

Die Haltekonstruktion 30 wird mit ihren oben beschriebenen bevorzugten konstruktiven Ausgestaltungen um bzw. auf die ringförmige Haltestruktur 14 gespritzt (Schritt S2), um das negative Kupplungsteil 1 zu bilden. Haltekonstruktion 30 und Haltestruktur 14 werden vorzugsweise über Stoffschluss aneinander befestigt. Es ist zudem bevorzugt aber nicht zwingend erforderlich, einen oder zwei der radial vorstehenden Ränder der Haltestruktur 14 vorzusehen. Einerseits unterstützt der der Kugelpfanne 16 abgewandte radial vorstehende Rand der Haltestruktur 14 das Ausformen der Kupplungskonstruktion 10 aus der Spritzgussform. Andererseits bilden die radial vorstehenden Ränder der Haltekonstruktur 14 jeweils einen Hinterschnitt in axialer Richtung für die Haltekonstruktion 30, sodass dadurch die Konstruktion des negativen Kupplungsteils 1 zusätzlich stabilisiert wird.

### Bezugszeichenliste

- 1: Negatives Kupplungsteil
- 10: Kupplungskonstruktion
- 12: Federarm
- 14: Haltestruktur
- 16: Kugelpfanne
- 18: Hinterschnitt
- 30: Haltekonstruktion
- 32: Ring
- 34: Radiale Vertiefung
- 36: Axiale Vertiefung
- 50: Erstes Bauteil
- 60: Zweites Bauteil
- 62: Öffnung
- 64: Innenseite der Öffnung 62
- 70: Steckkupplung
- 80: Positives Kupplungsteil
- 82: Bolzen
- 84: Kugelkopf
- S1: Bereitstellen und Spritzgießen
- S2: Umspritzen
- S3: Vorsehen

## Patentansprüche

1. Ein negatives Kupplungsteil (1) für eine Steckkupplung, mit der ein erstes (50) und ein zweites Bauteil (60) lösbar miteinander verbindbar sind, wobei das negative Kupplungsteil (1) die folgenden Merkmale aufweist:
a. eine Kupplungskonstruktion (10) mit einer Kugelpfanne (16) an einem ersten Ende der Kupplungskonstruktion (10), die aus mindestens zwei in axialer Richtung der Kupplungskonstruktion (10) verlaufenden Federarmen (12) besteht sowie aus einem ersten Werkstoff zum Aufnehmen und lösbaren Befestigen eines positiven Kupplungsteils (80), wobei die mindestens zwei Federarme (12) an einem zweiten Ende der Kupplungskonstruktion (10) über eine umlaufende Haltestruktur (14) miteinander verbunden sind, und
eine ringförmige Haltekonstruktion (30) am zweiten Ende der Kupplungskonstruktion (10) aus einem zweiten Werkstoff, die die Kupplungskonstruktion (10) umgibt und die durch einen um die Kupplungskonstruktion (10) umlaufenden und an dieser befestigten Ring (32) gebildet wird, sodass das negative Kupplungsteil (1) über die ringförmige Haltekonstruktion (30) in einer Öffnung (62) des zweiten Bauteils befestigbar ist, während
b. der zweite Werkstoff eine höhere Elastizität als der erste Werkstoff aufweist, sodass Bauteilschwingungen durch die ringförmige Haltekonstruktion (30) aufnehmbar sind.

2. Negatives Kupplungsteil (1) gemäß Anspruch 1, dessen mindestens zwei Federarme (12) am ersten Ende miteinander verbunden sind.

3. Negatives Kupplungsteil (1) gemäß einem der vorhergehenden Ansprüche, dessen Kupplungskonstruktion (10) aus einem Metall, einem thermoplastischen Kunststoff oder einem thermoplastischen Elastomer besteht, das/der eine geringere Elastizität als der zweite Werkstoff der Haltkonstruktion (30) aufweist.

4. Negatives Kupplungsteil (1) gemäß einem der vorhergehenden Ansprüche, dessen Ring (32) eine umlaufende und nach außen in radialer Richtung offene radiale Vertiefung (34) aufweist, in der eine Innenseite (64) der Öffnung (62) des zweiten Bauteils (60) aufnehmbar ist.

5. Negatives Kupplungsteil (1) gemäß einem der vorhergehenden Ansprüche, dessen Haltekonstruktion (30) eine in axialer Richtung der Haltekonstruktion (30) offene und um die Haltekonstruktion (30) umlaufende axiale Vertiefung (36) aufweist, sodass Verformungen der Haltekonstruktion (30) in radialer Richtung aufnehmbar sind.

6. Negatives Kupplungsteil (1) gemäß Anspruch 5, dessen axiale Vertiefung (36) eine Mehrzahl die axiale Vertiefung (36) überbrückende Versteifungsstege (38) aufweist.

7. Negatives Kupplungsteil (1) gemäß einem der vorhergehenden Ansprüche, dessen Haltekonstruktion (30) aus einem thermoplastischen Kunststoff oder einem Elastomer höherer Elastizität als die Kupplungskonstruktion (10) besteht.

8. Eine Steckkupplung (70), mit der ein erstes (50) und ein zweites Bauteil (60) lösbar miteinander verbindbar sind und die die folgenden Merkmale aufweist:
ein positives Kupplungsteil (80) in Verbindung mit dem ersten Bauteil (50), das in einem negativen Kupplungsteil (1) gemäß einem der vorhergehenden Ansprüche in Verbindung mit dem zweiten Bauteil (60) lösbar und verrastend aufnehmbar ist.

9. Steckkupplung (70) gemäß Anspruch 8, die einen Bolzen (82) mit Kugelkopf (84) als positives Kupplungsteil (80) und eine Kupplungskonstruktion (10) mit Kugelpfanne (16) zur Aufnahme des Kugelkopfs (84) aufweist, in der die Kupplungskonstruktion (10) mit einem umlaufenden Ring (32) als Haltekonstruktion (30) verbunden ist, der eine radiale Vertiefung (34) zur Befestigung des negativen Kupplungsteils (1) am zweiten Bauteil (60) und eine axiale Vertiefung (36) zum Ausgleich von Schwingungen und Toleranzen aufweist.

10. Herstellungsverfahren eines negativen Kupplungsteils (1) bestehend aus zwei Werkstoffen unterschiedlicher Elastizität, das die folgenden Schritte aufweist:
a. Bereitstellen (S1) einer Kupplungskonstruktion (10) mit einer Kugelpfanne (16) an einem ersten Ende der Kupplungskonstruktion (10), die aus mindestens zwei in axialer Richtung der Kupplungskonstruktion (10) verlaufenden Federarmen besteht sowie aus einem ersten Werkstoff, wobei die mindestens zwei Federarme (12) an einem zweiten Ende der Kupplungskonstruktion (10) über eine umlaufende Haltestruktur (14) miteinander verbunden sind,
b. Umspritzen (S2) der Kupplungskonstruktion (10) mit einer ringförmigen Haltekonstruktion (30) aus einem zweiten Werkstoff, die die Kupplungskonstruktion (10) umgibt und die durch einen um die Kupplungskonstruktion (10) umlaufenden und an dieser befestigten Ring (32) gebildet wird, wobei der zweite Werkstoff eine höhere Elastizität als der erste Werkstoff aufweist.

11. Herstellungsverfahren gemäß Anspruch 10, mit dem Schritt:
Spritzgießen (S1) der Kupplungskonstruktion (10) aus einem thermoplastischen Kunststoff oder einem Elastomer und
Umspritzen der Haltekonstruktion aus einem elastischeren thermoplastischen Kunststoff oder Elastomer im Vergleich zur Kupplungskonstruktion (10).

12. Herstellungsverfahren gemäß Anspruch 10 oder 11 mit dem Schritt:
Vorsehen (S3) einer in axialer Richtung der Haltekonstruktion (30) offenen und um die Haltekonstruktion (30) umlaufenden axialen Vertiefung (36) und/oder einer umlaufenden und nach außen in radialer Richtung offenen radialen Vertiefung (34) an der Haltekonstruktion (30).

## Claims

1. A negative coupling part (1) for a plug-in coupling, with which a first component (50) and a second component (60) can be detachably connected to each other, wherein the negative coupling part (1) comprises the following features:
a. a coupling construction (10) with a ball socket (16) at a first end of the coupling construction (10), comprising at least two spring arms (12) extending in the axial direction of the coupling construction (10) and made of a first material for accommodating and detachably fastening a positive coupling part (80), wherein the at least two spring arms (12) are connected together at a second end of the coupling construction (10) via a circumferential retaining structure (14) and
an annular retaining construction (30) at the second end of the coupling construction (10) made of a second material, which surrounds the coupling construction (10) and which is formed by a ring (32), circumferential about the coupling construction (10) and fastened thereto, so that the negative coupling part (1) can be fastened in an opening (62) of the second component via the annular retaining construction (30), wherein
b. the second material has a higher elasticity than the first material, so that component vibrations can be absorbed by the retaining construction (30).

2. Negative coupling part (1) according to claim 1, the at least two spring arms (12) thereof being connected together at the first end.

3. Negative coupling part (1) according to one of the preceding claims, the coupling construction (10) thereof being made of a metal, a thermoplastic resin or a thermoplastic elastomer, which has a lower elasticity than the second material of the retaining construction (30).

4. Negative coupling part (1) according to one of the preceding claims, the ring (32) thereof having a circumferential recess (34) radially open outward in the radial direction, in which an inside (64) of the opening (62) of the second component (60) can be accommodated.

5. Negative coupling part (1) according to one of the preceding claims, the retaining construction (30) thereof having an axial recess (36) circumferential about the retaining construction (30) and open in the axial direction of the retaining construction (30), so that deformations of the retaining construction (30) can be realized in the radial direction.

6. Negative coupling part (1) according to claim 5, the axial recess (36) thereof having a plurality of reinforcing webs (38) bridging the axial recess (36).

7. Negative coupling part (1) according to one of the preceding claims, the retaining construction (30) thereof is made of a thermoplastic resin or an elastomer of higher elasticity than the coupling construction (10).

8. A plug-in coupling (70) with which a first component (50) and a second component (60) can be detachably connected together, and which comprises the following features:
a positive coupling part (80) in connection with the first component (50), which can be accommodated detachably and latching in a negative coupling part (1) according to one of the preceding claims in connection to the second component (60).

9. Plug-in coupling (70) according to claim 8, which has a bolt (82) having a ball head (84) as a positive coupling part (80) and a coupling construction (10) having a ball socket (16) for accommodating the ball head (84), in which the coupling construction (10) is connected to a circumferential ring (32) as a retaining construction (30), which has one radial recess (34) for fastening the negative coupling part (1) to the second component (60) and an axial recess (36) for compensating vibration and tolerances.

10. Production method of a negative coupling part (1) comprised of two materials of different elasticity comprising the following steps:
a. providing (S1) a coupling construction (10) with a ball socket (16) at a first end of the coupling construction (10), comprising at least two spring arms (12) extending in the axial direction of the coupling construction (10) and made of a first material, wherein the at least two spring arms (12) are connected together at a second end of the coupling construction (10) via a circumferential retaining structure (14),
b. overmolding (S2) the coupling construction (10) generating an annular retaining construction (30) made of a second material, which surrounds the coupling construction (10) and which is formed by a ring (32), circumferential about the coupling construction (10) and fastened thereto, wherein the second material has a higher elasticity than the first material.

11. Production method according to claim 10, with the step:
injection molding (S1) the coupling construction (10) made of a thermoplastic resin or an elastomer and
overmolding the retaining construction made of a more elastic thermoplastic resin or elastomer, compared to the coupling construction (10).

12. Production method according to claim 10 or 11, with the step:
providing (S3) an axial recess (36) circumferential about the retaining construction (30) and open in the axial direction of the retaining construction (30), and/or a radial recess (34) at the retaining construction (30) that is circumferential and radially open outward in the radial direction.

## Revendications

1. Pièce d'accouplement négative (1) pour un accouplement enfichable, permettant de relier un premier (50) et un deuxième composant (60) l'un à l'autre de façon détachable, la pièce d'accouplement négative (1) présentant les caractéristiques suivantes :
a. une construction d'accouplement (10) avec un coussinet sphérique (16) à une première extrémité de la construction d'accouplement (10), lequel est constitué d'au moins deux bras élastiques (12) s'étendant dans la direction axiale de la construction d'accouplement (10) et d'un premier matériau permettant de recevoir et de fixer de façon détachable une pièce d'accouplement positive (80), les au moins deux bras élastiques (12) étant reliés l'un à l'autre à une deuxième extrémité de la construction d'accouplement (10) par le biais d'un structure de maintien périphérique (14), et
- une construction de maintien annulaire (30) à la deuxième extrémité de la construction d'accouplement (10), constituée d'un deuxième matériau, laquelle entoure la construction d'accouplement (10) tout en étant formée par un anneau (32) entourant la construction d'accouplement (10) et fixé à celle-ci, de telle façon que la pièce d'accouplement négative (1) peut être fixée dans une ouverture (62) du deuxième composant par le biais de la construction de maintien annulaire (30), tandis que
b. le deuxième matériau présente une élasticité plus élevée que le premier matériau, de manière à pouvoir recevoir des oscillations de composant par le biais de la construction de maintien annulaire (30).

2. Pièce d'accouplement négative (1) selon la revendication 1, dont les au moins deux bras élastiques (12) sont reliés ensemble à la première extrémité.

3. Pièce d'accouplement négative (1) selon l'une des revendications précédentes, dont la construction d'accouplement (10) est constituée d'un métal, d'une matière synthétique thermoplastique ou d'un élastomère thermoplastique, lequel/laquelle présente une élasticité moins élevée que le deuxième matériau de la construction de maintien (30).

4. Pièce d'accouplement négative (1) selon l'une des revendications précédentes, dont l'anneau (32) présente une cavité radiale (34) périphérique et ouverte vers l'extérieur dans la direction radiale, dans laquelle un côté intérieur (64) de l'ouverture (62) du deuxième composant (60) peut être reçu.

5. Pièce d'accouplement négative (1) selon l'une des revendications précédentes, dont la construction de maintien (30) présente une cavité axiale (36) ouverte dans la direction axiale de la construction de maintien (30) et entourant la construction de maintien (30), de manière à pouvoir recevoir des déformations de la construction de maintien (30) dans la direction radiale.

6. Pièce d'accouplement négative (1) selon la revendication 5, dont la cavité axiale (36) présente une pluralité d'entretoises de renforcement (38) passant pardessus la cavité axiale (36).

7. Pièce d'accouplement négative (1) selon l'une des revendications précédentes, dont la construction de maintien (30) est constituée d'une matière synthétique thermoplastique ou d'un élastomère avec une élasticité supérieure à celle de la construction d'accouplement (10).

8. Accouplement enfichable (70) permettant de relier un premier (50) et un deuxième composant (60) l'un à l'autre de façon détachable et présentant les caractéristiques suivantes :
une pièce d'accouplement positive (80) reliée au premier composant (50), laquelle peut être reçue de façon amovible et par encliquetage dans une pièce d'accouplement négative (1) selon l'une des revendications précédentes, reliée au deuxième composant.

9. Accouplement enfichable (70) selon la revendication 8, lequel présente un boulon (82) avec une tête sphérique (84) en tant que pièce d'accouplement positive (80) et une construction d'accouplement (10) avec un coussinet sphérique (16) destiné à recevoir la tête sphérique (84), dans laquelle la construction d'accouplement (10) est reliée à une bague périphérique (32) en tant que construction de maintien (30), laquelle présente une cavité radiale (34) permettant de fixer la pièce d'accouplement négative (1) au deuxième composant (60) et une cavité axiale (36) permettant de compenser des oscillations et des tolérances.

10. Procédé de fabrication d'une pièce d'accouplement négative (1) constituée de deux matériaux avec des élasticités différentes, présentant les étapes suivantes :
a. Mise à disposition (S1) d'une construction d'accouplement (10) avec un coussinet sphérique (16) à une première extrémité de la construction d'accouplement (10), lequel est constitué d'au moins deux bras élastiques (12) s'étendant dans la direction axiale de la construction d'accouplement (10) et d'un premier matériau, les au moins deux bras élastiques (12) étant reliés l'un à l'autre à une deuxième extrémité de la construction d'accouplement (10) par le biais d'un structure de maintien périphérique (14), et
b. Surmoulage (S2) de la construction d'accouplement (10) avec une construction de maintien annulaire (30) constituée d'un deuxième matériau, laquelle entoure la construction d'accouplement (10) tout en étant formée par un anneau (32) entourant la construction d'accouplement (10) et fixé à celle-ci, le deuxième matériau présentant une élasticité plus élevée que le premier matériau.

11. Procédé de fabrication selon la revendication 10, comprenant l'étape suivante :
moulage par injection (S1) de la construction d'accouplement (10) à partir d'une matière synthétique thermoplastique ou d'un élastomère et
surmoulage de la construction de maintien à partir d'une matière synthétique thermoplastique ou d'un élastomère plus élastique en comparaison avec la construction d'accouplement (10).

12. Procédé de fabrication selon la revendication 10 ou 11, comprenant l'étape suivante :
mise à disposition (S3) d'une cavité axiale (36) ouverte dans la direction axiale de la construction de maintien (30) et entourant la construction de maintien (30), et/ou d'une cavité radiale (34) sur la construction de maintien (30), laquelle est ouverte vers l'extérieur dans la direction axiale.
